Europäisches Patentamt

European Patent Office

Office européen des brevets

(19)

(11) Veröffentlichungsnummer : **0 017 270**
**B1**

(12) **EUROPÄISCHE PATENTSCHRIFT**

(45) Veröffentlichungstag der Patentschrift :
16.02.83

(21) Anmeldenummer : 80200181.8

(22) Anmeldetag : 03.03.80

(51) Int. Cl.³ : **F 16 M 9/00, E 02 D 27/44,**
**F 01 D 25/28, F 02 C 7/20**

(54) Fundament für eine schwingungserzeugende Maschine.

(30) Priorität : 09.04.79 DE 2914251

(43) Veröffentlichungstag der Anmeldung :
15.10.80 Patentblatt 80/21

(45) Bekanntmachung des Hinweises auf die Patenter-
teilung : 16.02.83 Patentblatt 83/07

(84) Benannte Vertragsstaaten :
**CH FR GB NL SE**

(56) Entgegenhaltungen :
**DE A 1 634 654**
**DE B 1 142 081**
**DE B 1 154 677**
**GB A 1 113 483**
**BETON- UND STAHLBETONBAU, Heft 5, Mai 1966**
**BERLIN (DE) KURT HIRSCHFELD : « Tiefbau »,**
**Seiten 115-134.**
**THE INSTITUTION OF MECHANICAL ENGI-**
**NEERS, Proceedings 1966-1967, Band 181, Teil 1,**
**Nr. 22 LONDON (GB) G. WRONSKI : « Founda-**
**tions for turbomachinery », Seiten 624-627.**

(73) Patentinhaber : **BBC Aktiengesellschaft Brown,**
**Boveri & Cie.**
**Haselstrasse**
**CH-5401 Baden (CH)**

(72) Erfinder : **Gallasch, Hubert, Dipl.-Ing.**
**Warnmünderweg 5**
**D-6800 Mannheim-Vogelstang (DE)**

Fundament für eine schwingungserzeugende Maschine

Die Erfindung betrifft ein Fundament für eine schwingungserzeugende Maschine, insbesondere Turbomaschine, mit tiefer Abstimmung sowie mit einer rahmenartigen Tischplatte, die Längsträger und Querträger aus armiertem Beton mit etwa rechteckigem Querschnitt aufweist.

Derartige tiefabgestimmte Stahlbetonfundamente sind bekannt, beispielsweise aus « Brown Boveri Mitteilungen », Nr. 10/11, Band 54, 1967, Seite 720, Bild 6.

Um schwingungserzeugende Maschinen möglichst erschütterungsfrei aufstellen zu können, müssen die Eigenschwingungszahlen des aus Maschine und Tischplatte bestehenden Schwingungssystems so abgestimmt sein, dass diese einen ausreichenden Sicherheitsabstand zur Erregerfrequenz, d. h. zur Betriebsdrehzahl der Maschine aufweisen. Bildet man hierbei das Schwingungssystem derart aus, dass seine Grundfrequenz unterhalb der Betriebsdrehzahl liegt, so erhält man ein tief abgestimmtes Fundament. Liegen die Eigenfrequenzen des Schwingungssystems dagegen oberhalb der Betriebsdrehzahl, so ergibt sich ein hoch abgestimmtes Fundament.

Die nächstliegende Eigenfrequenz der Tischplatte sollte einen Mindestabstand von etwa 15 % zur Betriebsdrehzahl haben. Dieser Sicherheitsabstand ist erforderlich, da für die dynamische Berechnung des Schwingungssystems ein idealisiertes Massensystem angenommen wird und da für die der Berechnung dienenden Lastangaben mehr oder weniger mit Ungenauigkeiten behaftet sind. Hinzu kommt noch, dass eine exakte Berücksichtigung der Querschnittsformen kaum möglich ist und der Berechnung somit vereinfachte Querschnittsformen zugrunde gelegt werden. Die Praxis zeigt daher, dass die tatsächlichen Eigenfrequenzen des Schwingungssystems bis zu etwa 10 % von den errechneten abweichen können.

Dieser Sachverhalt führt bei Fundamenten der eingangs genannten Art zu erheblichen Schwierigkeiten. Denn bei der üblichen Ausbildung der Längs- und Querträger als Vollprofile ergibt sich eine dichte Aufeinanderfolge der Eigenfrequenzen des Schwingungssystems, deren Abstand bei der Verwendung des Fundaments für eine Turbomaschine etwa 3 bis 5 Hz im Bereich der Betriebsdrehzahl der Maschine beträgt. Der geforderte Sicherheitsabstand von mindestens etwa 15 % zur Betriebsdrehzal der Maschine die meist bei 50 oder 60 Umdrehungen pro Sekunde liegt, ist somit kaum zu verwirklichen.

Der Erfindung liegt daher die Aufgabe zugrunde, ein Fundament der eingangs genannten Art so auszubilden, dass der Abstand aufeinanderfolgender Eigenfrequenzen des Schwingungssystems grösser ist und durch Anpassung der Querschnitte ein ausreichender Sicherheitsabstand z. B. etwa 15 % zwischen Betriebsdrehzahl der Maschine und nächstgelegener Eigenfrequenz des Schwingungssystems leicht eingehalten werden kann. Hierbei soll das Fundament einfach im Aufbau und daher kostengünstig herzustellen und darüberhinaus den betrieblichen Anforderungen voll gewachsen sein. Die Lösung dieser Aufgabe besteht erfindungsgemäss darin, dass die Träger derart mit Hohlräumen versehen sind, dass diese bei ausreichender Torsionsfestigkeit jeweils ein axiales Trägheitsmoment bezüglich der horizontalen Biegeachse aufweisen, welches das für ausreichende Festigkeit erforderliche Mass um wenigstens das 3-fache überschreitet.

Hierdurch wird mit einer vorgegebenen und für tiefe Abstimmung erforderlichen Betonmasse eine sehr grosse Biegesteifigkeit der Träger bzw. der Tischplatte erreicht, wodurch sich die Anzahl der Eigenfrequenzen des erfindungsgemässen Schwingungssystems gegenüber der Verwendung von massiven Beton-Trägern verringert. Die Folge ist, dass der Abstand der Eigenfrequenzen des Schwingungssystems grösser ist und diese daher leicht so gelegt werden können, dass der geforderte Mindestabstand zur Erregerfrequenz bzw. Betriebsdrehzahl der Maschine eingehalten werden kann. So ergibt sicht gegenüber einem Fundament mit einer Tischplatte aus Vollbetonträgern, deren Eigenfrequenzabstand etwa 3 bis 5 Hz beträgt, durch die erfindungsgemässe Ausbildung ein Abstand der Eigenfrequenzen von etwa 15 Hz (im Bereich der Betriebsdrehzahl der Maschine) so dass ein Sicherheitsabstand von 15 % zur Betriebsdrehzahl verwirklicht ist.

Weitere Einzelheiten über die Ausbildung der Träger sind für den Fachmann nicht erforderlich, da dieser anhand der kennzeichnenden Merkmale der Erfindung in der Lage ist, eine geeignete Dimensionierung der Träger aufgrund der dynamischen Berechnung so auszuwählen, dass die Betriebsdrehzahl der Maschine etwa in die Mitte zwischen zwei aufeinanderfolgenden Eigenfrequenzen des Schwingungssystems zu liegen kommt.

In vorteilhafter Weise erstrecken sich die Hohlräume etwa über die gesamte Länge der Träger, wobei es besonders empfehlenswert ist, die Träger als Hohlkastenträger auszubilden. Hohlträger aus Kastenelementen auszuführen, ist zwar an sich bekannt (DE-B-1 154 677, DE-B-1 142 081). Jedoch handelt es sich hierbei nicht um Beton-, sondern um Stahlkonstruktionen, denen insofern eine andere Problematik zugrundeliegt, als sie aufgrund des exakt bekannten Elastizitätsmodules für Stahl genauer zu dimensionieren sind.

Eine besonders bevorzugte Weiterbildung der Erfindung kann darin bestehen, dass die Hohlräume an Verbindungsstellen der Träger miteinander verbunden sind.

Zur weiteren Versteifung der Träger, insbesondere der Torsionssteifigkeit, kann es günstig sein, in den Hohlräumen Versteifungsschotten, vorzugsweise im Bereich der Verbindungsstellen quer zueinander verlaufender Träger, anzuordnen. Um hierbei die Hohlräume in ihrem Zusammenhang nicht zu unterbrechen und somit für die Verlegung von Rohrleitungen oder dergleichen ausnutzen zu können, kann eine bevorzugte Weiterbildung der Erfindung darin bestehen, dass die Versteifungsschotten jeweils mindestens eine Durchgangsöffnung aufweisen. Auch diese Lösungen sind aus den bereits genannten DE-B-1 154 677 und DE-B-1 142 081 an sich bekannt.

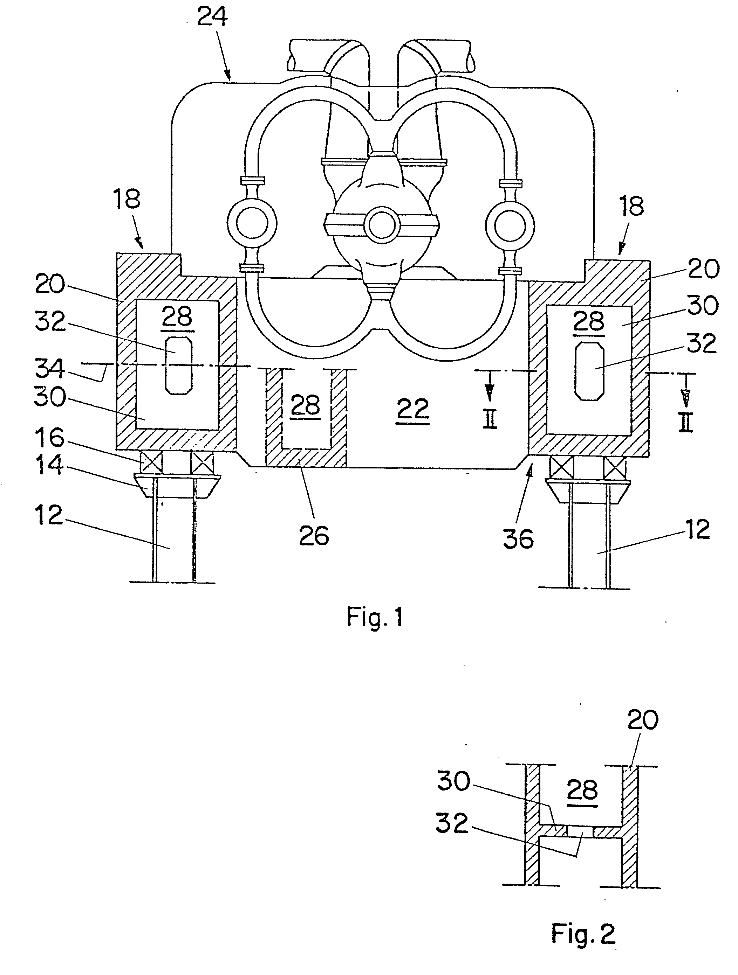

Ein Ausführungsbeispiel der Erfindung wird anhand der Figuren 1 und 2 erläutert.

Hierbei zeigen :

Figur 1   einen vertikalen Querschnitt durch ein mit einer Turbomaschine versehenes Fundament gemäss der Erfindung und

Figur 2   einen Schnitt durch den Gegenstand der Figur 1 gemäss der Schnittlinie II/II, wobei hinter der Schnittlinie liegende Teile nicht dargestellt sind.

Gemäss Figur 1 weist das Fundament vom Untergrund ausgehende vertikale Stützen 12 auf, welche an ihrem oberen Ende jeweils ein Lager 14 aufweisen, auf dem Federelemente 16 angeordnet sind. Die Tischplatte 18, welche sich auf diesen Federelementen 16 abstützt, ist aus Längsträgern 20 und Querträgern 22 zu einem rahmenartigen Gebilde zusammengesetzt, auf dem die Turbomaschine 24 gelagert ist. Gegebenenfalls kann die Tischplatte auch direkt auf schlanken Stützen ohne Federn gelagert sein. Querträger 22 können je nach den Erfordernissen in verschiedener Anzahl vorgesehen sein, im vorliegenden Beispiel ist lediglich ein Querträger 22 in Seitenansicht dargestellt, da sich dieser Träger in einer zur Zeichenebene parallelverlaufenden Ebene befindet, wobei sein Querschnitt 26 angedeutet ist.

Die Träger 20, 22 weisen ein im wesentlichen etwa rechteckiges Profil auf, das mit Hohlräumen 28 versehen ist, die sich etwa über die gesamte Länge dieser Träger erstrecken. Da die Träger 20, 22 vorzugsweise als Hohlkastenträger ausgebildet sind, weisen diese Hohlräume 28 ebenfalls ein im wesentlichen etwa rechteckiges Profil auf, wie aus Figur 1 zu erkennen ist. Die Hohlräume 28 der Längsträger 20 und der Querträger 22 sind hierbei an Kreuzungsstellen miteinander verbunden, so dass innerhalb der Tischplatte 18 ein zusammenhängendes Hohlraumsystem vorhanden ist, in dem Rohrleitungen und/oder Hilfsaggregate angeordnet werden können.

Die Träger 20, 22 sind mit Versteifungsschotten 30 versehen, die etwa senkrecht zur Längsachse der Träger in den Hohlräumen 28, insbesondere an hochbelasteten Stellen angeordnet sind. Diese Versteifungsschotten 30, die mit den Trägern einstückig ausgeführt sind, dienen vorzugsweise zur Verstärkung der Tischplatte 18 in jenen Bereichen, in denen quer zueinanderlaufende Träger miteinander verbunden sind. Um den Zusammenhang des Hohlraumsystems der Tischplatte zu gewährleisten, sind die Versteifungsschotten 30 scheibenartig ausgebildet und weisen jeweils eine Durchtrittsöffnung 32 auf. Die Stärke der Versteifungsschotten in den Hohlräumen 28 ist etwa der Wandstärke der Träger gleich.

Die Längs -und Querträger 20 bis 22 sind aus armiertem Beton hergestellt. Hierbei ist das Profil der Träger 20, 22 so gewählt, dass bei ausreichender Torsionsfestigkeit diese jeweils ein axiales Trägheitsmoment um die zugeordnete horizontale Biegeachse 34 aufweisen, das wenigstens das 3-fache jenes Trägheitsmomentes ist, welches bei vorgegebener Belastung für eine ausreichende Festigkeit erforderlich wäre. Um jedoch den Bauaufwand in Grenzen zu halten, wird man in der Praxis das 6-fache Trägheitsmoment kaum überschreiten. Hierbei können die Querträger 22 untereinander und/oder gegenüber den Längsträgern 20 in ihrem Trägheitsmoment bzw. ihrem Profil je nach der erforderlichen Abstimmung unterschiedlich ausgebildet sein, wie dies auch in Figur 1 angedeutet ist.

So ergeben sich z. B. bei einem erfindungsgemässen Fundament für eine Turbine von 440 Mw und einer Betriebsdrehzahl von 50 Umdrehungen pro Sekunde unmittelbar benachbarte Eigenfrequenzen bei 42,5 Hz und 57,5 Hz, so dass ein Sicherheitsabstand von jeweils 15 % ausgehend von 50 Hz, eingehalten ist.

Ein weiterer Vorteil des Hohlkastensystems ist die nachträgliche Verstimmungsmöglichkeit der Eigenfrequenzen durch Auftragen von Lasten in den Hohlräumen.

Bezeichnungsliste

| | |
|---|---|
| 12 | Stützen |
| 14 | Lager |
| 16 | Federelement |
| 18 | Tischplatte |
| 20 | Längsträger |
| 22 | Querträger |
| 24 | Turbomaschine |
| 26 | Querschnitt |
| 28 | Hohlräume |
| 30 | Versteifungsschotten |
| 32 | Durchtrittsöffnung |
| 34 | Biegeachse |

**Ansprüche**

1. Fundament für eine schwingungserzeugende Maschine, insbesondere Turbomaschine, mit tiefer Abstimmung sowie mit einer rahmenartigen Tischplatte (18), die Längsträger (20) und Querträger (22) aus armierten Beton mit etwa rechteckigem Querschnitt aufweist, dadurch gekennzeichnet, dass die Träger (20, 22) derart mit Hohlräumen (28) versehen sind, dass diese bei ausreichender Torsionsfestigkeit jeweils ein axiales Trägheitsmoment bezüglich der horizontalen Biegeachse aufweisen, welches das für ausreichende Festigkeit erforderliche Mass um wenigstens das 3-fache überschreitet.

2. Fundament nach Anspruch 1, dadurch gekennzeichnet, dass sich die Hohlräume (28) etwa über die gesamte axiale Länge der Träger (20, 22) erstrecken.

3. Fundament nach Anspruch 1 oder 2, dadurch gekennzeichnet, dass die Träger (20, 22) als Hohlkastenträger ausgebildet sind.

4. Fundament nach Anspruch 2 oder 3, dadurch gekennzeichnet, dass die Hohlräume (18, 20) an Verbindungsstellen (36) der Träger miteinander verbunden sind.

5. Fundament nach einem der Ansprüche 2 bis 4, dadurch gekennzeichnet, dass in den Hohlräumen (28) Versteifungsschotten (30) vorzugsweise im Bereich der Verbindungsstellen (36) quer zueinander verlaufender Träger (20, 22) angeordnet sind.

6. Fundament nach Anspruch 5, dadurch gekennzeichnet, dass die Versteifungsschotten (30) jeweils mindestens eine Durchtrittsöffnung (32) aufweisen.

## Claims

1. Foundation for a vibration-generating machine, especially a turbo-machine, with Low tuning and with a frame-like table plate (18) which has longitudinal girders (20) and transverse girders (22) made of reinforced concrete with an approximately rectangular cross-section, characterised in that the girders (20, 22) are provided with cavities (28) in such a way that with sufficient torsional resistance these cavities each have, with regard to the horizontal bending axis, an axial moment of inertia which exceeds the amount required for sufficient resistance by a factor of at least 3.

2. Foundation according to Claim 1, characterised in that the cavities (28) extend approximately over the entire axial length of the girders (20, 22).

3. Foundation according to Claim 1 or 2, characterised in that the girders (20, 22) are designed as hollow box girders.

4. Foundation according to Claim 2 or 3, characterised in that the cavities (18, 20) are connected to one another at connecting points (36) of the girders.

5. Foundation according to one of Claims 2 to 4, characterised in that stiffening bulkheads (30) are located in the cavities (28), preferably in the region of the connecting points (36) of girders (20, 22) extending transversely to one another.

6. Foundation according to Claim 5, characterised in that the stiffening bulkheads (30) each have at least one through-orifice (32).

## Revendications

1. Base pour machine produisant des vibrations, en particulier pour turbomachine, à accord de bas niveau pourvue d'une table en forme de cadre (18) qui comporte des longerons de support (20) et des traverses de support (22) en béton armé de section transversale à peu près rectangulaire, caractérisée en ce que les éléments de support (20, 22) sont pourvus de vides (28) à telle enseigne que, pour une résistance à la torsion suffisante, ils présentent chaque fois un moment d'inertie axial par rapport à l'axe de flexion horizontal valant au mois le triple de la masse nécessaire pour obtenir une solidité suffisante.

2. Base suivant la revendication 1, caractérisée en ce que les vides (28) s'étendent environ sur l'ensemble de la longueur axiale des éléments de support (20, 22).

3. Base suivant la revendication 1 ou 2, caractérisée en ce que les éléments de support (20, 22) ont la forme d'éléments en caisson creux.

4. Base suivant la revendication 2 ou 3, caractérisée en ce que les vides (18, 20) sont raccordés les uns aux autres aux endroits de jonction (36) des éléments de support.

5. Base suivant l'une quelconque des revendications 2 à 4, caractérisée en ce que des cloisons raidisseuses (30) sont disposées dans les vides (28), de préférence dans la zone des endroits de jonction (36) d'éléments de supports (20, 22) perpendiculaires l'un à l'autre.

6. Base suivant la revendication 5, caractérisée en ce que les cloisons raidisseuses (30) présentent chaque fois au moins une ouverture de passage (32).

Fig. 1

Fig. 2